# EUROPÄISCHE PATENTANMELDUNG

(11) **EP 3 103 744 A1**
(43) Veröffentlichungstag der Anmeldung: **14.12.2016**
(21) Anmeldenummer: 15171793.1
(22) Anmeldetag: 12.06.2015
(51) Int. Cl.: B65G 49/06

(54) **LAGERBOCK ZUR STEHENDEN LAGERUNG VON PLATTENFÖRMIGEN GÜTERN**

(71) Anmelder: Tolges-Kunststoffverarbeitung GmbH & Co. KG, 34414 Warburg (DE)
(72) Erfinder: Grundkötter, Wilhelm, 34414 Warburg (DE)
(74) Vertreter: Patentanwälte Walther Hinz Bayer PartGmbB

(57) **Zusammenfassung**

Gegenstand der Erfindung ist ein Lagerbock (1) zur stehenden Lagerung von plattenförmigen Gütern, insbesondere von Glasscheiben, umfassend mindestens zwei beabstandet zueinander angeordnete Schienen (4), die durch mehrere hintereinander angeordnete Achsen (10) mit Walzenkörpern (12) miteinander in Verbindung stehen, wobei zumindest ein Walzenkörper (12) mehrere Rollen (14) aufweist, die lösbar miteinander verbindbar sind.

## Beschreibung

Die Erfindung betrifft einen Lagerbock zur stehenden Lagerung von plattenförmigen Gütern, insbesondere von Glasscheiben, umfassend mindestens zwei beabstandet zueinander angeordnete Schienen, die durch mehrere hintereinander angeordnete Achsen mit Walzenkörpern miteinander in Verbindung stehen.

Ein Lagerbock der eingangs genannten Art ist aus dem Stand der Technik hinreichend bekannt. Derartige Lagerböcke sind häufig mit einem Fahrgestell versehen, und dienen als Montage- bzw. Transporthüfe bei der Herstellung von Fensterglasscheiben bzw. ganzen Fenstern. Die Walzenkörper haben eine Breite, die der Stärke der Glasscheiben entspricht, die auf den Walzenkörpern lagern. Zu beiden Seiten der Walzenkörper befinden sich Begrenzungsscheiben, um ein Verrutschen der Scheibe bei der Lagerung zu vermeiden. Häufig sind mehrere dieser Walzenkörper nebeneinander auf einer Achse angeordnet, um auf diese Weise mehrere Scheiben auf dem Lagerbock zu lagern. Wie bereits ausgeführt, weisen die Walzenkörper eine bestimmte vorgegebene Breite auf, die mit der Stärke der Scheibe korreliert. Das heißt, für jede Scheibenstärke gibt es Walzenkörper einer bestimmten Breite. Das heißt allerdings weiterhin auch, dass wenn Scheiben mit einer anderen Stärke gelagert werden sollen, ein Austausch der Walzenkörper stattfinden muss, dass heißt, dass Walzenkörper mit einer anderen Breite auf die Achsen aufgezogen werden müssen. Hieraus wird unmittelbar deutlich, dass eine Vielzahl unterschiedlich breiter Walzenkörper für die entsprechenden Scheiben unterschiedlicher Dicke vorgehalten werden müssen.

Die der Erfindung zugrunde liegende Aufgabe besteht nunmehr darin, Walzenkörper in ihrer Breite an die entsprechende Stärke der zu lagernden plattenförmigen Güter, insbesondere Glasscheiben, anpassen zu können.

Zur Lösung der Aufgabe wird erfindungsgemäß vorgeschlagen, dass zumindest ein Walzenkörper mehrere Rollen aufweist, die lösbar miteinander verbindbar sind. Insbesondere ist in diesem Zusammenhang vorgesehen, dass die Rollen steckbar miteinander in Verbindung stehen. Hierdurch wird die Möglichkeit eröffnet, mehrere Rollen zur Bildung eines Walzenkörpers miteinander steckbar aber lösbar zu verbinden, um auf diese Weise an Ort und Stelle auf die entsprechende Stärke, beispielsweise einer Fensterglasscheibe, angepasste Walzenkörper bereitstellen zu können.

Vorteilhafte Merkmale und Ausgestaltungen der Erfindung ergeben sich aus den Unteransprüchen.

So ist insbesondere vorgesehen, dass zur steckbaren Verbindung der Rollen miteinander zumindest eine Rolle einen axial über die Rolle überstehenden Steckkranz aufweist, der in lösbaren Eingriff mit der benachbarten Rolle bringbar ist. Dadurch, dass jede Rolle einen solchen Steckkranz aufweist, können beliebig viele Rollen zur Bildung des Walzenkörpers miteinander verbunden werden.

Im Einzelnen ist vorgesehen, dass der Steckkranz mehrere Segmente aufweist, wobei die Segmente an ihren freien Enden jeweils eine nach außen gerichtete Nase aufweisen, die mit einer in einer zentrischen Öffnung zur Aufnahme der Achse in der Rolle angeordneten Nut verrastbar ist. Auf diese Weise ist eine einfache aber stabile lösbare Verbindung zwischen den einzelnen Rollen herstellbar.

Die Segmente des Steckkranzes sind vorteilhaft kreisförmig und bevorzugt tangential beabstandet zueinander an der Rolle angeordnet. Somit sind die Segmente zum Lösen der Verbindung, dass heißt, um ein Herausgleiten der Nasen aus der Nut zu ermöglichen, nach innen, dass heißt auf die Mittellängsachse der zentrischen Öffnung zu, verschwenkbar.

Die Walzenkörper weisen bevorzugt zu beiden Seiten jeweils eine Begrenzungsscheibe auf. Eine erfindungsgemäße Rolle zeichnet sich nun dadurch aus, dass zu beiden Seiten eine erste und eine zweite Begrenzungsscheibe durch die Rolle lösbar aufnehmbar ist, wobei der Durchmesser der Begrenzungsscheibe größer ist, als der der Rolle, um z. B. Glasscheiben auf einem aus einer oder mehreren Rollen hergestellten Walzenkörper sicher lagern zu können. In diesem Zusammenhang ist im Einzelnen vorgesehen, dass die erste Begrenzungsscheibe einen Steckkranz zur lösbaren, steckbaren Verbindung mit der benachbarten Rolle aufweist. Die zweite Begrenzungsscheibe besitzt in der zentrischen Öffnung eine umlaufende Nut zur Aufnahme des Steckkranzes der benachbarten Rolle. Das bedeutet, dass auf der einen Seite eines aus mehreren Rollen hergestellten Walzenkörpers eine Begrenzungsscheibe mit einem Steckkranz vorgesehen ist, wohingegen die andere, auf der gegenüberliegenden Seite angeordnete Begrenzungsscheibe in der zentrischen Öffnung eine umlaufende Nut für den Steckkranz der entsprechenden benachbarten Rolle zeigt.

Des Weiteren ist vorgesehen, dass die Rollen und/oder die Begrenzungsscheiben durch die Achse gegen Lösen gesichert sind. Das bedeutet, dass die zentrische Öffnung in der Rolle und die Achse einen Durchmesser aufweisen, der derart bemessen ist, dass die Nasen der Segmente des Steckkranzes dann, wenn der Walzenkörper auf der Achse sitzt, nicht aus der in der zentrischen Öffnung der Rolle angeordneten Nut gelangen können. Ähnliches ist in Bezug auf die Ausbildung der Begrenzungsscheiben vorgesehen. Das heißt, dass die zentrische Öffnung in der Begrenzungsscheibe ebenfalls einen Durchmesser aufweist, der derart bemessen ist, dass die Nasen der Segmente des Steckkranzes nicht aus der in der zentrischen Öffnung der Begrenzungsscheibe angeordneten Nut gelangen können. Gleichzeitig ist der Durchmesser der zentrischen Öffnung derart gewählt, dass die Rollen sich auf der Achse drehen können.

Nach einem weiteren Merkmal der Erfindung ist vorgesehen, dass der Lagerbock zur Verfahrbarkeit Räder aufweist, und vorteilhaft an zumindest einer der beiden Schienen eine seitliche Stütze vorgesehen ist, an denen die plattenförmigen Güter, und hier insbesondere Glasscheiben, schräg stehend anliegen können.

Anhand der Zeichnungen wird die Erfindung nachstehend beispielhaft näher erläutert.
- Fig. 1: zeigt den Lagerbock schematisch in einer Ansicht von der Seite;
- Fig. 2: zeigt eine Ansicht gemäß der Linie II-II aus Fig. 1;
- Fig. 3: zeigt einen aus mehreren Rollen zusammensteckbaren Walzenkörper;
- Fig. 4: zeigt den Walzenkörper im zusammengesteckten Zustand der Rollen mit den beiden Begrenzungsscheiben;
- Fig. 5: zeigt den Walzenkörper gemäß Fig. 4 in einer perspektivischen Darstellung.

Der mit 1 bezeichnete Lagerbock weist vier Räder 2 auf, um den Lagerbock verfahrbar zu gestalten. Der Lagerbock 1 umfasst zwei parallel zueinander verlaufende Schienen 4, die zur Bildung des Gestells 5 durch Traversen 6 miteinander verbunden sind. Seitlich besitzt der Lagerbock auf zumindest einer Schiene 4 eine vertikal nach oben gerichtete Stütze 8, an der z. B. Glasscheiben angelehnt anliegen.

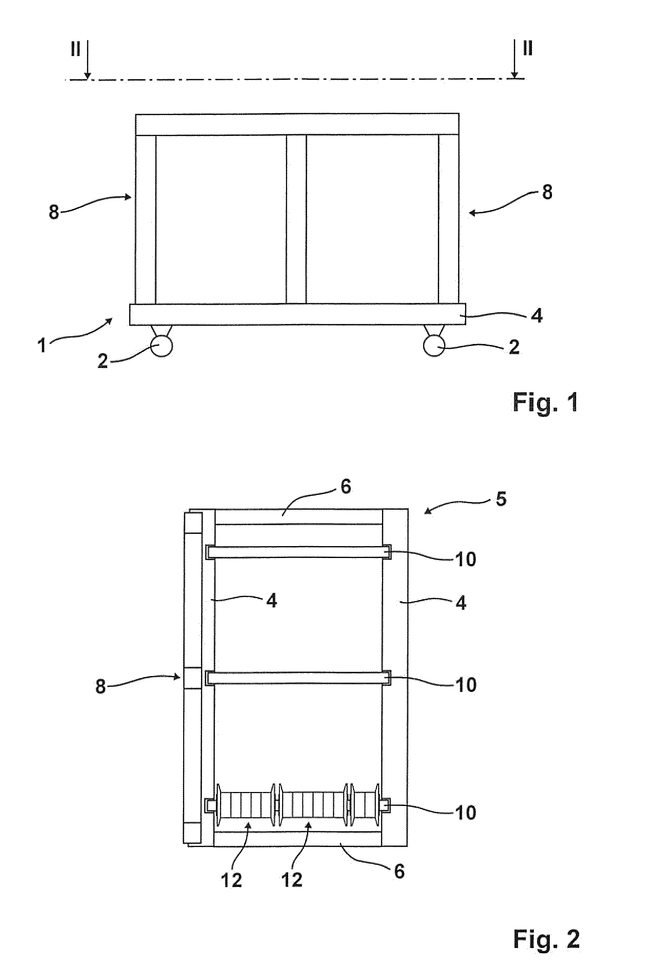

Die Schienen 4 sind des Weiteren durch mehrere in den Schienen 4 gelagerten Achsen 10 miteinander verbunden. Auf den Achsen 10 lagern mehrere nebeneinander angeordnete Walzenkörper 12, die durchaus unterschiedlich breit sein können. Unterschiedlich breit deshalb, weil durch die unterschiedliche Breite die Möglichkeit besteht, auch plattenförmige Güter, insbesondere Glasscheiben, unterschiedlicher Dicke aufnehmen zu können (Fig. 2).

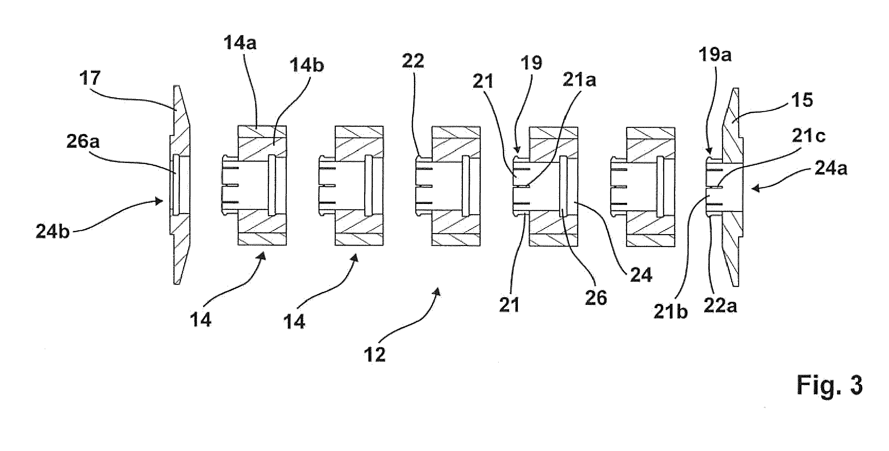

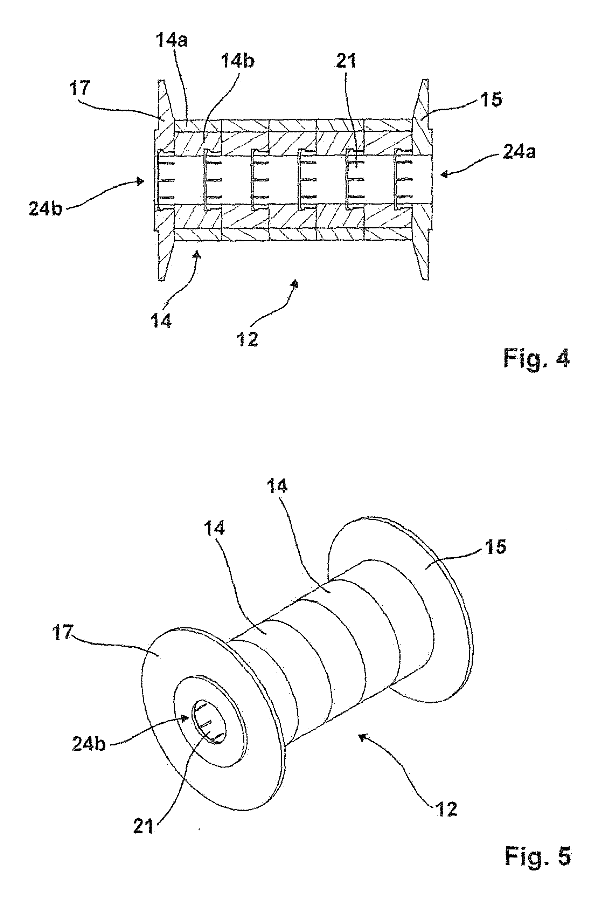

Die Ausgestaltung des Walzenkörpers 12 ergibt sich in Anschauung von den Figuren 3 bis 5. Der insgesamt mit 12 bezeichnete Walzenkörper weist fünf hintereinander angeordnete Rollen 14 auf, die steckbar miteinander verbindbar sind. Zu beiden Enden sind Begrenzungsscheiben 15 und 17 vorgesehen, die mit der jeweils letzten Rolle 14 ebenfalls steckbar verbindbar sind.

Die Verbindung der einzelnen Rollen 14 untereinander erfolgt durch den mit 19 bezeichneten Steckkranz. Der Steckkranz 19 steht axial über die Rolle 14 über und ragt in die zentrische Öffnung 24 der benachbarten Rolle 14 hinein, wobei der Steckkranz 19 einzelne Segmente 21 zeigt, die endseitig jeweils eine nach außen gerichtete Nase 22 aufweisen, wobei die Nasen 22 der Segmente 21 des Steckkranzes 19 in die in der zentrischen Öffnung 24 der Rolle 14 angeordneten tangential umlaufende Nut 26 rastend eingreifen. Zwischen den einzelnen Segmenten des Steckkranzes 19 besteht ein Abstand 21 a, der es erlaubt, dass die einzelnen Segmente 21 des Steckkranzes zum Lösen der Nasen aus der Nut 26 sich zum Inneren der zentrischen Öffnung 24 zu verschwenken können.

Zur Bildung des kompletten Walzenkörpers 12 besitzt, wie dies bereits an anderer Stelle erläutert wurde, die jeweils letzte Rolle 14 endseitig die erste und zweite Begrenzungsscheibe 15, 17. Die erste Begrenzungsscheibe 15 mit der zentrischen Öffnung 24a weist hierbei ebenfalls einen Steckkranz 19a auf, der mit der benachbarten Rolle 14 verrastbar ist, wie dies bereits aus der Verbindung der Rollen 14 untereinander bekannt ist. Der Steckkranz 19a zeigt demzufolge mehrere Segmente 21 b mit Nasen 22a, wobei die Segmente einen tangentialen Abstand 21c zueinander aufweisen. Die zweite Begrenzungsscheibe 17 zeigt in der zentrischen Öffnung 24b die umlaufende Nut 26a, in der die Nasen 22 des Steckkranzes 19 der Rolle 14 verrastbar sind. Grundsätzlich gilt, dass die Fixierung der Begrenzungsscheiben 15 und 17 zu beiden Enden des Walzenkörpers 12 an den jeweils endseitigen Rollen 14 entsprechend der Verbindung der Rollen 14 untereinander vorgenommen ist.

Die zentrischen Öffnungen 24 der Rollen 14, sowie die zentrischen Öffnungen 24a, 24b der Begrenzungsscheiben 15, 17 eines Walzenkörpers dienen der Aufnahme der Achse 10 (Fig. 2), auf der die Rollen drehbar angeordnet sind. Der Durchmesser der Achse 10 ist derart bemessen, dass bei auf der Achse aufsitzenden Rollen 14 die einzelnen Segmente 21 mit den endseitig nach außen gerichteten Nasen 22 des Steckkranzes 19 nicht nach innen aus der umlaufenden Nut 26 ausweichen können, sodass die Rollen durch die Achse 10 auf der Achse 10 gesichert sind. Gleiches gilt vom Grundsatz her auch für die Begrenzungsscheiben 15 und 17.

Die Rollen 14 weisen zwei unterschiedliche Materialien auf, wobei der Mantel 14a der Rollen 14 aus einem rutschfesten Elastomer ausgebildet ist, hingegen der Rollenkörper 14b aus einem festen Kunststoff. Die Rollen werden hierbei im sogenannten 2K Spritzgussverfahren hergestellt.

### Bezugszeichenliste:

- 1: Lagerbock
- 2: Räder
- 4: Schiene
- 5: Gestell
- 6: Traverse
- 8: Stütze
- 10: Achse
- 12: Walzenkörper
- 14: Rolle
- 14a: Mantel
- 14b: Rollenkörper
- 15: Begrenzungsscheibe
- 17: Begrenzungsscheibe
- 19: Steckkranz
- 19a: Steckkranz
- 21: Segment
- 21a: Abstand
- 21b: Segment
- 21c: Abstand
- 22: Nase
- 22a: Nase
- 24: Öffnung
- 24: Bohrung
- 24a: Öffnung
- 24b: Öffnung
- 26: Nut
- 26a: Nut

## Patentansprüche

1. Lagerbock (1) zur stehenden Lagerung von plattenförmigen Gütern, insbesondere von Glasscheiben, umfassend mindestens zwei beabstandet zueinander angeordnete Schienen (4), die durch mehrere hintereinander angeordnete Achsen (10) mit Walzenkörpern (12) miteinander in Verbindung stehen,
**dadurch gekennzeichnet,**
**dass** zumindest ein Walzenkörper (12) mehrere Rollen (14) aufweist, die lösbar miteinander verbindbar sind.

2. Lagerbock (1) nach Anspruch 1,
**dadurch gekennzeichnet,**
**dass** die Rollen (14) steckbar miteinander in Verbindung stehen.

3. Lagerbock (1) nach Anspruch 2,
**dadurch gekennzeichnet,**
**dass** zur steckbaren Verbindung der Rollen (14) untereinander zumindest eine Rolle (14) einen axial über die Rolle (14) überstehenden Steckkranz (19) aufweist, der in lösbaren Eingriff mit der benachbarten Rolle (14) bringbar ist.

4. Lagerbock (1) nach Anspruch 3,
**dadurch gekennzeichnet,**
**dass** der Steckkranz (19) mehrere Segmente (21) aufweist, wobei die Segmente (21) an ihrem freien Ende eine nach außen gerichtete Nase (22) aufweisen, die mit einer in einer zentrischen Öffnung (24) zur Aufnahme der Achse (10) angeordneten Nut (26) in der benachbarten Rolle (14) verrastbar sind.

5. Lagerbock (1) nach Anspruch 4,
**dadurch gekennzeichnet,**
**dass** die Segmente (21) des Steckkranzes (19) kreisförmig an der Rolle (14) angeordnet sind.

6. Lagerbock (1) nach Anspruch 4 oder 5,
**dadurch gekennzeichnet,**
**dass** die Segmente (21) tangential beabstandet zueinander an der Rolle (14) angeordnet sind.

7. Lagerbock (1) nach einem der voranstehenden Ansprüche,
**dadurch gekennzeichnet,**
**dass** durch eine Rolle (14) zu beiden Seiten eine erste und eine zweite Begrenzungsscheibe (15, 17) lösbar aufnehmbar ist, deren Durchmesser größer ist als der der Rolle (14).

8. Lagerbock (1) nach Anspruch 7,
**dadurch gekennzeichnet,**
**dass** die erste Begrenzungsscheibe (15) einen Steckkranz (19a) zur lösbaren, steckbaren Verbindung mit einer Rolle (14) aufweist.

9. Lagerbock (1) nach Anspruch 7,
**dadurch gekennzeichnet,**
**dass** die zweite Begrenzungsscheibe (17) eine zentrische Öffnung (24b) aufweist, wobei in der zentrischen Öffnung (24b) eine umlaufende Nut (26a) zur Aufnahme des Steckkranzes (19) einer Rolle (14) angeordnet ist.

10. Lagerbock (1) nach einem der voranstehenden Ansprüche,
**dadurch gekennzeichnet,**
**dass** die Rollen (14) und/oder die Begrenzungsscheiben (15, 17) durch die Achse (10) gegen Lösen gesichert sind.

11. Lagerbock (1) nach einem der voranstehenden Ansprüche,
**dadurch gekennzeichnet,**
**dass** der Lagerbock (1) zur Verfahrbarkeit Räder (2) aufweist.

12. Lagerbock (1) nach einem der voranstehenden Ansprüche,
**dadurch gekennzeichnet,**
**dass** der Lagerbock (1) eine seitliche Stütze (8) für die plattenförmigen Güter aufweist.

## Geänderte Patentansprüche

### Geänderte Patentansprüche gemäss Regel 137(2) EPÜ.

1. Lagerbock (1) zur stehenden Lagerung von plattenförmigen Gütern, insbesondere von Glasscheiben, umfassend mindestens zwei beabstandet zueinander angeordnete Schienen (4), die durch mehrere hintereinander angeordnete Achsen (10) miteinander in Verbindung stehen, wobei auf den Achsen (10) Walzenkörper (12) angeordnet sind, wobei die plattenförmigen Güter auf den Walzenkörpern (12) lagern,
**dadurch gekennzeichnet,**
**dass** zumindest ein Walzenkörper (12) mehrere Rollen (14) aufweist, die lösbar miteinander verbindbar sind.
